# FASCICULE DE BREVET EUROPEEN

(11) **EP 1 470 990 B1**
(45) Date de publication et mention de la délivrance du brevet: **02.04.2008**
(21) Numéro de dépôt: 04007027.8
(22) Date de dépôt: 24.03.2004
(51) Int. Cl.: B62D 25/14, B60H 1/00

(54) **Planche de bord pour véhicule automobile**
Armaturenbrett für Kraftfahrzeug
Dashboard for automotive vehicle

(30) Priorité: 31.03.2003 FR 0303963
(43) Date de publication de la demande: 27.10.2004
(73) Titulaire: Valeo Systèmes Thermiques, 78321 Le Mesnil St Denis Cedex (FR)
(72) Inventeur: Passebecq, Ghislain, 78640 Neauphle le Vieux (FR); Hullot, Thierry, 78530 Buc (FR); LaRoyenne, Charles-Henri, 78960 Voisins le Bretonneux (FR)

(56) Documents cités:
- EP-A- 0 078 174
- EP-A- 0 115 103
- DE-A- 3 806 783
- FR-A- 2 823 152
- US-A- 4 883 717
- US-B1- 6 520 849
- PATENT ABSTRACTS OF JAPAN vol. 011, no. 064 (M-565), 26 février 1987 (1987-02-26) -& JP 61 222811 A (NISSAN SHATAI CO LTD), 3 octobre 1986 (1986-10-03)

## Description

L'invention se rapporte aux équipements des véhicules automobiles et elle concerne plus particulièrement une planche de bord de véhicule automobile.

Une planche de bord de véhicule automobile constitue un élément d'équipement qui est placé transversalement à l'avant de l'habitacle et qui regroupe un certain nombre de fonctions nécessaires au fonctionnement du véhicule.

Le document DE 38 06 783 A décrit une planche de bord pour véhicule automobile, qui comprend une coquille extérieure, la coquille extérieure présentant une interface; une coquille intérieure, la coquille intérieure conformée présentant une interface; et des moyens de liaison agencés pour assembler l'interface de la coquille extérieure et l'interface de la coquille intérieure de manière à délimiter un conduit creux de renforcement.

La planche de bord est habituellement supportée par une poutre transversale, réalisée en matière métallique, qui est reliée à la structure du véhicule. Cette poutre transversale peut faire partie intégrante de la structure du véhicule ou bien être rapportée sur cette dernière. Dans ce dernier cas, la poutre transversale peut être intégrée à la planche de bord, l'ensemble étant ensuite monté sur le véhicule par raccordement de la poutre transversale à la structure du véhicule.

La planche de bord est formée d'un nombre élevé de composants, qui comprennent notamment des éléments d'armature reliés à la poutre transversale et des composants, tels que des panneaux d'équipement, des organes de commande, des panneaux d'instruments, une boîte à gants, un cendrier, etc. De plus, la planche de bord peut loger au moins une partie de certains équipements, comme par exemple l'appareil de chauffage-ventilation et/ou climatisation, un ou plusieurs sacs gonflables de sécurité, etc.

L'invention vise essentiellement à simplifier la structure des planches de bord connues, en proposant une planche de bord d'une conception nouvelle qui permet d'en diminuer le nombre de composants, d'en réduire le poids, et d'en diminuer aussi l'encombrement.

L'invention propose à cet effet une planche de bord comprenant :
- une feuille extérieure conformée, réalisée en un matériau sandwich composé de deux couches métalliques emprisonnant une couche de matière plastique, la feuille conformée présentant une interface ;
- une feuille intérieure conformée, réalisée en un matériau sandwich composé de deux couches métalliques emprisonnant une couche de matière plastique, la feuille intérieure conformée présentant une interface ; et
- des moyens de liaison agencés pour assembler l'interface de la feuille extérieure et l'interface de la feuille intérieure de manière à délimiter un conduit creux de renforcement.

Ainsi, la planche de bord de l'invention comprend essentiellement deux feuilles conformées, chacune réalisée en un matériau sandwich, et assemblées mutuellement par des interfaces respectives pour délimiter un conduit creux. Par "matériau sandwich", on entend désigner un matériau formé de deux couches métalliques ente lesquelles est placée une couche de matière plastique.

L'invention permet ainsi de supprimer la poutre transversale traditionnelle et de la remplacer par la combinaison de deux feuilles conformées qui délimitent conjointement un conduit creux servant de renforcement. Cette combinaison de deux feuilles conformées permet de réaliser un élément de structure qui constitue la planche de bord ou un sous-ensemble de cette planche de bord.

Par l'expression "feuille extérieure" on entend désigner essentiellement une feuille, que l'on peut appeler aussi "feuille support" qui est habituellement tournée du côté de l'habitacle. En outre, par l'expression "feuille intérieure", on entend désigner une feuille, que l'on peut appeler aussi "feuille conduit", qui est habituellement tournée du côté du Le document EP-A-0 115 103 contient des informations relatives à des matériaux sandwich pour son utilisation en l'industrie de l'automobile. compartiment moteur. Ainsi, la feuille extérieure constituera essentiellement une enveloppe de la planche de bord, alors que la feuille intérieure contribuera essentiellement à délimiter une partie du conduit.

Cependant, les qualificatifs "intérieure" et "extérieure" sont utilisés à des fins de commodité et les positions respectives des deux feuilles peuvent être inversées.

Les deux feuilles en matériau sandwich sont conformées, c'est-à-dire mises en forme, et peuvent ainsi revêtir différentes formes choisies adaptées à chaque véhicule considéré.

Dans l'invention, on utilise avantageusement le même matériau sandwich pour la feuille extérieure et pour la feuille intérieure.

Les couches métalliques du matériau sandwich de la feuille extérieure et/ou du matériau sandwich de la feuille intérieure sont avantageusement choisies parmi l'acier et l'aluminium. On préfère tout particulièrement l'acier en raison de ses aptitudes à être mis en forme, par exemple par emboutissage.

Les couches métalliques précitées ont avantageusement une épaisseur comprise entre 0,2 et 0,3mm, de préférence de 0,25mm.

La couche de matière plastique du matériau sandwich de la feuille extérieure et/ou du matériau sandwich de la feuille intérieure est avantageusement constituée d'un polymère choisi parmi la famille des matières thermoplastiques.

L'épaisseur de la couche de matière plastique est avantageusement comprise entre 1mm et 3mm, de préférence de 1,5mm.

Dans un mode de réalisation préféré, on utilise des feuilles sandwich comportant un film polymère de 1,5mm d'épaisseur compris entre deux couches métalliques formées chacune d'un acier de 0,25mm d'épaisseur. Ainsi, l'épaisseur de l'ensemble est de 2mm.

L'utilisation de feuilles sandwich a pour avantage d'éviter la formation de condensation due à la résistance thermique du film de polymère entre les couches métalliques.

En outre, un tel matériau peut être facilement mis en forme, par exemple par emboutissage. De plus, cette feuille sandwich possède un rapport élevé rigidité en flexion/densité et un faible poids. Elle améliore en outre les propriétés acoustiques.

Dans l'invention, la feuille extérieure et la feuille intérieure sont avantageusement conformées par emboutissage.

Les moyens de liaison utilisés peuvent comprendre par exemple une couche de colle interposée entre les interfaces respectives de la feuille extérieure et de la feuille intérieure. Ces moyens de liaison peuvent être aussi mécaniques.

L'utilisation de colle est tout particulièrement préférée car cela permet de former un conduit creux étanche.

Dans l'invention, la feuille extérieure peut constituer une armature interne de la planche de bord. Elle peut aussi constituer un panneau support d'instruments. Ceci permet de regrouper un certain nombre de fonctions sur la planche de bord ainsi obtenue.

La feuille extérieure peut comporter une face externe revêtue au moins en partie d'un matériau de garniture. Différents matériaux sont envisageables. Avantageusement, on préfère utiliser une mousse de matière plastique avec une peau extérieure.

Dans l'invention, le conduit creux sert en premier lieu à renforcer la structure de l'ensemble.

Toutefois, il est avantageux d'utiliser ce conduit creux pour des fonctions supplémentaires. En particulier, ce conduit peut délimiter au moins un canal de circulation de fluide, notamment d'un flux d'air.

Dans une réalisation avantageuse, le conduit creux délimite un canal d'air froid et un canal d'air chaud agencés pour alimenter conjointement au moins une sortie d'air aménagée dans une ouverture de la feuille extérieure.

A cet effet, on peut prévoir que le conduit creux loge une cloison qui sépare le canal d'air froid et le canal d'air chaud.

Avantageusement, le conduit creux loge au moins un volet pour mélanger, en proportion réglable, le flux d'air froid et le flux d'air chaud au travers de la sortie d'air et permettre, le cas échéant, et/ou pour ouvrir ou fermer une sortie d'air.

Dans la description qui suit, faite seulement à titre d'exemple, on se réfère aux dessins annexés, sur lesquels :
- la figure 1 est une vue partielle en perspective, avec arrachement, d'une planche de bord selon une première forme de réalisation de l'invention ;
- la figure 2 est une vue partielle en perspective analogue à la figure 1 montrant une variante de réalisation ;
- la figure 3 est une vue partielle en perspective, avec arrachement, d'une planche de bord selon une deuxième forme de réalisation de l'invention ;
- la figure 4 est une vue schématique en coupe d'une feuille en matériau sandwich ;
- les figures 5 et 6 illustrent l'assemblage d'une feuille extérieure et d'une feuille intérieure dans deux formes de réalisation différentes ;
- la figure 7 est une vue en perspective d'une planche de bord selon une troisième forme de réalisation de l'invention, dont seule la feuille extérieure est représentée, et qui est équipée d'une garniture ;
- la figure 8 est une vue en perspective d'une planche de bord selon une quatrième forme de réalisation de l'invention ;
- la figure 9 est une vue en perspective d'une planche de bord selon une cinquième forme de réalisation de l'invention ;
- la figure 10 est une vue en coupe montrant la division d'un conduit creux en deux canalisations d'air ;
- la figure 11 est une vue en perspective éclatée d'une planche de bord selon une sixième forme de réalisation de l'invention, comportant une cloison dans le conduit creux ; et
- la figure 12 est une vue en perspective d'une planche de bord selon une septième forme de réalisation de l'invention.

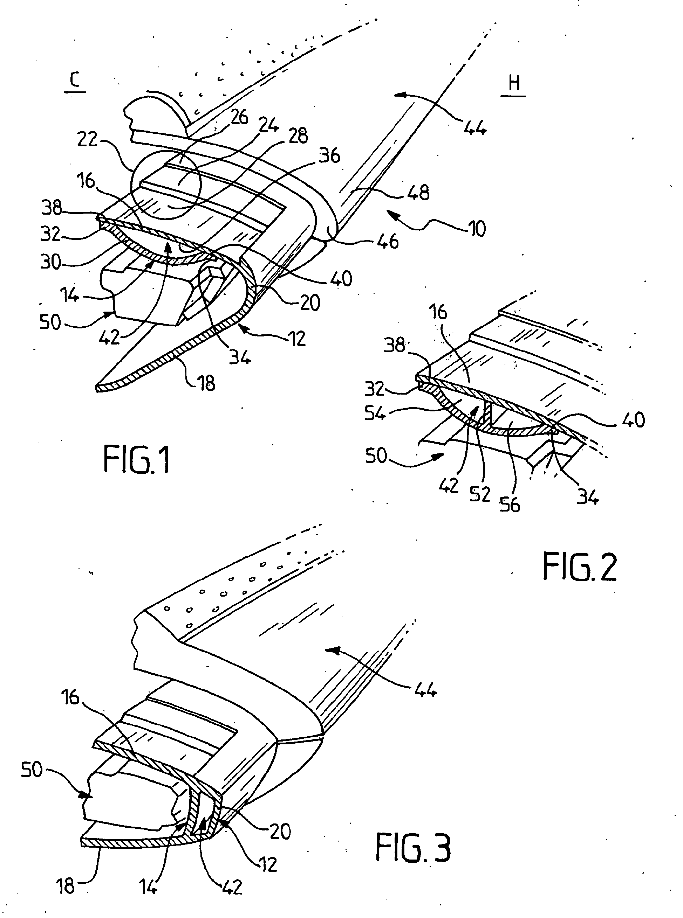

On se réfère d'abord à la figure 1 qui montre une planche de bord 10 qui comprend une feuille extérieure conformée 12 et une feuille intérieure conformée 14. La planche de bord 10 est implantée transversalement à l'avant de l'habitacle H et à l'arrière du compartiment moteur C. La feuille extérieure 12 a ici sensiblement la forme d'un C dont l'ouverture est tournée vers le compartiment moteur. Vue en coupe, la feuille extérieure 12 comprend une face supérieure 16 reliée à une face inférieure 18 par une face arrondie 20. Cette feuille 12 est réalisée dans un matériau sandwich qui est représenté en vue éclatée dans la zone 22 entourée sur le dessin. On distingue une âme 24 formée d'une couche de matière plastique emprisonnée entre deux couches métalliques 26 et 28. La nature de ce matériau sandwich sera décrite plus loin.

La feuille intérieure 14 est formée du même matériau sandwich. Comme vue en coupe sur la figure 1, la feuille 14 comprend une face incurvée 30 terminée par deux bords 32 et 34, sensiblement parallèles, qui définissent des interfaces venant s'appliquer contre la face intérieure 36 de la feuille 12. Les interfaces 32 et 34 de la feuille 14 coopèrent respectivement avec des interfaces 38, 40 de la feuille 12. Ceci permet de délimiter un conduit creux 42 de renforcement.

Les interfaces précitées sont assemblées entre elles pour délimiter le conduit creux 42 qui sert de renforcement. On constitue ainsi une structure rigide qui permet d'éviter le recours à une poutre transversale métallique traditionnelle. Dans l'exemple, la feuille 12 reçoit extérieurement une garniture 44. Celle-ci comprend avantageusement un matériau en mousse 46 ayant une peau extérieure 48. On utilise pour cela une mousse de matière plastique conventionnelle de nature à former une peau extérieure. Bien entendu, il est possible d'utiliser d'autres types de garnitures.

Comme on le voit sur la figure 1, dans l'ouverture du profil en C inversé de la feuille 12 est logée une partie d'un appareil 50 de chauffage-ventilation et/ou climatisation du véhicule.

Dans la variante de réalisation de la figure 2, le conduit creux 42 comporte une cloison interne 52 qui permet de diviser le conduit en deux canaux 54 et 56 pour la circulation d'un fluide, par exemple d'un flux d'air. Dans les figures 1 et 2, le conduit creux 42 se situe en dessous de la branche 16 formant la face supérieure de la planche de bord.

Dans la forme de réalisation de la figure 3, la feuille intérieure 14 est placée en regard de la face arrondie 20, si bien que le conduit creux 42 est situé dans un autre endroit.

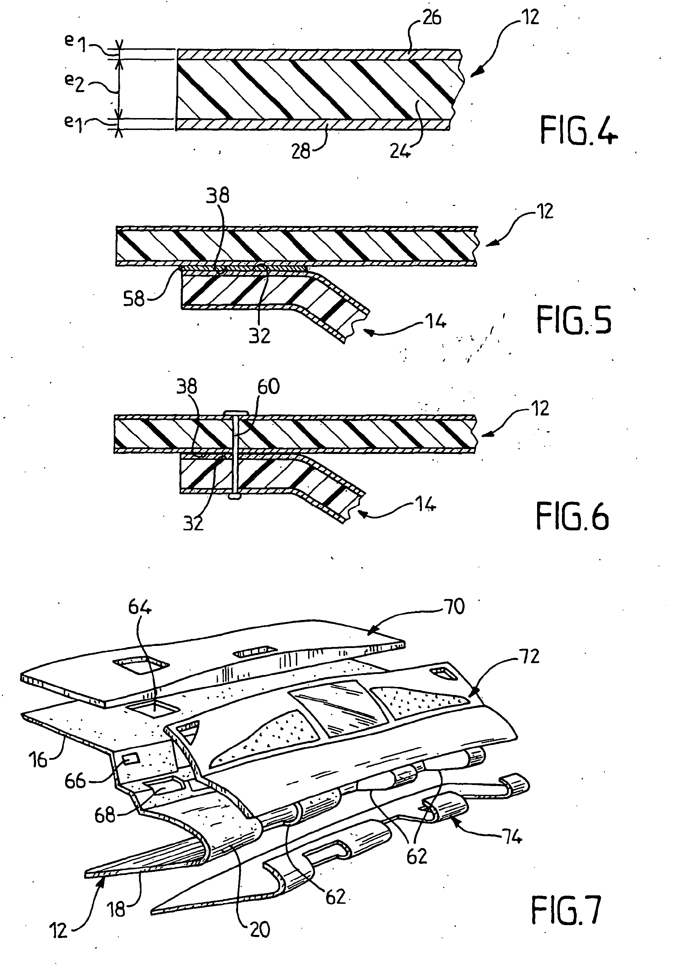

On se réfère maintenant à la figure 4 qui représente schématiquement une coupe d'un matériau sandwich de l'invention. Dans l'exemple, la feuille extérieure 12 comprend, comme déjà indiqué, une couche 24 de matière plastique emprisonné entre deux couches métalliques 26 et 28. Les couches métalliques 26 et 28 sont avantageusement formées en acier ou en aluminium, de préférence en acier compte-tenu de ses aptitudes à la mise en forme. Ces deux couches ont chacune une épaisseur e1 comprise entre 0,2 et 0,3mm, de préférence de 0,25mm. La couche 24 de matière plastique est avantageusement formée d'un polymère choisi parmi les matières thermoplastiques. Son épaisseur e2 est comprise entre 1mm et 3mm, de préférence de 1,5mm. Ainsi, l'épaisseur totale de la feuille 12 est de préférence de l'ordre de 2mm.

On se réfère maintenant à la figure 5 qui montre schématiquement l'assemblage d'une feuille extérieure 12 et d'une feuille intérieure 14. Ces deux feuilles sont formées du même matériau sandwich. Elles sont assemblées par des interfaces communes 32 et 38 par une couche de colle 58 interposée entre les interfaces. La colle utilisée est adaptée à la nature des couches métalliques à assembler. L'utilisation de colle est préférée car elle permet une liaison étanche entre les interfaces respectives des feuilles 12 et 14.

Dans la forme de réalisation de la figure 6, les deux feuilles 12 et 14 sont reliées par un assemblage mécanique, dans l'exemple par des rivets 60.

Bien entendu, d'autres modes de liaison sont envisageables, par exemple par soudure, ou par d'autres assemblages mécaniques, notamment par clinchage.

On se réfère maintenant à la figure 7 qui montre une autre planche de bord selon l'invention, dont on a représenté la feuille extérieure 12, la feuille intérieure 14 n'étant pas représentée pour des questions de simplification. Comme on peut le voir, la feuille extérieure 12 a une forme beaucoup plus complexe que dans le cas des figures 1 à 3. Elle comporte là-aussi, un profil général en C inversé dont la face supérieure 16 possède une forme plus complexe. Un certain nombre d'ouvertures sont aménagées dans la feuille 12 pour permettre de définir soit des sorties d'air, soit des logements pour des instruments, soit des logements pour des commandes, etc. On distingue notamment trois ouvertures 62 aménagées dans la région de la face incurvée 20. D'autres ouvertures 64, 66, 68 sont aménagées dans la face supérieure 16.

Dans l'exemple, la feuille 12 permet ainsi de supporter des instruments. Elle est revêtue extérieurement d'une garniture en trois parties. Cette garniture comprend une garniture supérieure 70, une garniture intermédiaire 72 et une garniture inférieure 74. Ces garnitures peuvent être formées directement sur la feuille extérieure, par exemple par moussage d'une matière plastique, ou bien elles peuvent être rapportées sur cette dernière, selon des procédés connus en eux-mêmes.

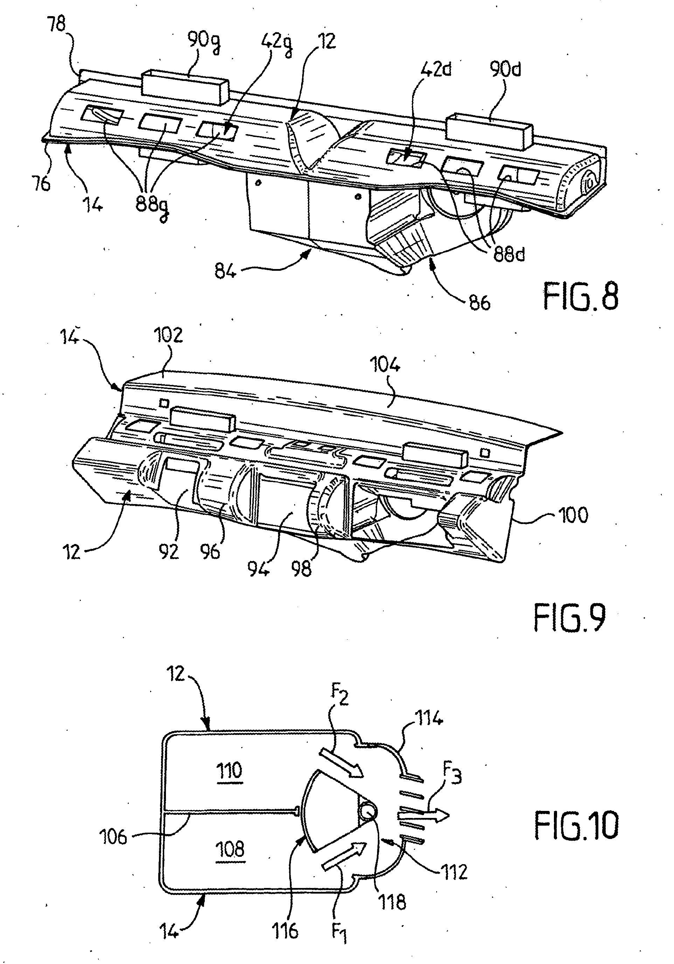

On se réfère maintenant à la figure 8 qui montre une planche de bord dans une autre variante de réalisation de l'invention comprenant là-aussi une feuille extérieure conformée 12 et une feuille intérieure conformée 14. La feuille intérieure 14 a ici sensiblement un profil en L avec une face horizontale 76 et une face verticale 78. La feuille extérieure 12 est conformée pour former deux boîtiers situés respectivement à droite et à gauche, et séparés par un bord longitudinal. Les feuilles 12 et 14 sont assemblées à leur périphérie pour délimiter ainsi deux conduits creux, à savoir un conduit creux 42d et un conduit creux 42g, respectivement à droite et à gauche.

Ces deux conduits sont destinés à être alimentés chacun en air à température ajustée provenant d'un bloc de chauffage-ventilation 84 qui envoie dans les deux boîtiers un flux d'air pulsé sous l'action d'une unité de ventilation 86. La planche de bord 10, qui constitue en réalité un élément de structure de la planche de bord, permet de supporter également, au moins en partie, le bloc de chauffage-ventilation 84 et l'unité de ventilation 86. Les deux boîtiers 80d et 80g possèdent différentes ouvertures qui permettent d'envoyer l'air à température ajustée dans différentes régions de l'habitacle. Ils comportent notamment chacun trois ouvertures frontales 88d respectivement 88g et une ouverture supérieure 90d, respectivement 90g. Les ouvertures frontales 88d et 88g sont destinées à alimenter des aérateurs de planche de bord, tandis que les ouvertures supérieures 90d et 90g sont destinées à envoyer un flux d'air vers la base du pare-brise (non représenté) du véhicule.

Dans la forme de réalisation de la figure 8, les feuilles 12 et 14 contribuent à former un sous-ensemble de la planche de bord, qui reçoit ensuite des composants traditionnels de la planche de bord.

Dans la forme de réalisation de la figure 9, la feuille extérieure 12 possède une forme très élaborée permettant de définir un certain nombre d'ouvertures 92,'94, etc. et un certain nombre de bossages 96, 98, etc. La feuille extérieure 12 intègre ainsi les fonctions habituelles d'une planche de bord et permet de recevoir des instruments, des commandes, etc. (non représentés). Dans cet exemple, la feuille intérieure 14 a sensiblement un profil en L avec une face sensiblement verticale 100 et une face sensiblement horizontale 102. Cette branche 102 délimite une surface destinée à s'étendre jusqu'au pied du pare-brise et dans laquelle on aperçoit une ouverture 104 destinée à former une buse pour envoyer de l'air vers la base du pare-brise.

La figure 10 montre schématiquement une vue en coupe partielle d'une planche de bord selon l'invention dont le conduit creux est divisé par une cloison 106 pour délimiter un canal d'air froid 108 et un canal d'air chaud 110 placés respectivement en partie inférieure et en partie supérieure dans le conduit creux.

Le conduit creux est formé de deux feuilles 12 et 14 selon l'invention et il débouche vers l'habitacle par une ouverture 112 munie d'un aérateur 114. Un volet réglable 116, monté pivotant autour d'un axe 118 est placé à l'intérieur du conduit creux. Il permet de répartir, en proportion variable, le flux d'air froid (flèche F1) et le flux d'air chaud (flèche F2) pour produire un flux d'air (F3) à température ajustée qui est envoyé dans l'habitacle au travers de l'aérateur 114.

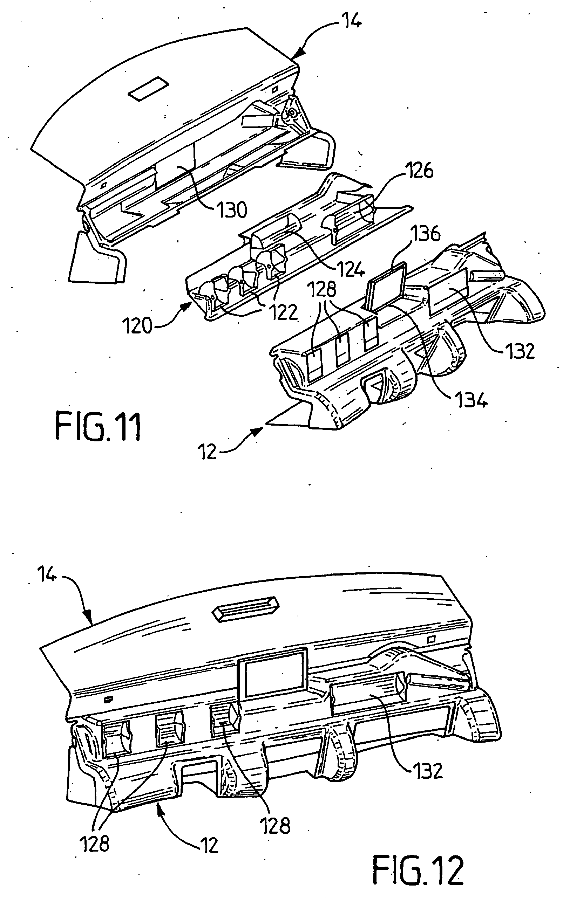

La planche de bord représentée aux figures 11 et 12 s'apparente à celle de la figure 9, sauf qu'elle intègre en outre des canaux d'air froid et d'air chaud selon le principe général représenté à la figure 10.

On retrouve, comme sur la figure 9, une feuille extérieure 12 présentant un certain nombre d'ouvertures et de bossages pour intégrer les fonctions habituelles d'une planche de bord, ainsi qu'une feuille intérieure 14.

Entre les deux feuilles est disposé, au montage, un élément 120, formant cloison, possédant une forme complexe. Cet élément comporte, dans l'exemple, trois volets 122 situés du côté gauche, un volet 124 situé sensiblement au centre et en partie supérieure, et un volet 126 situé du côté droit. Les volets 122 permettent de contrôler la distribution d'air au travers de trois ouvertures 128 de la feuille extérieure 12. Le volet 124 permet de contrôler le flux d'air au travers d'une ouverture 130 de la feuille intérieure 14, tandis que le volet 126 permet de contrôler le flux d'air au travers d'une ouverture 132 de la feuille extérieure 12.

On observera que la feuille extérieure 12 comprend une ouverture supérieure 134 qui permet l'introduction d'un radiateur de chauffage 136. La figure 12 montre la planche de bord de la figure 11, une fois assemblée.

## Revendications

1. Planche de bord pour véhicule automobile, comprenant :
- une feuille extérieure conformée (12), réalisée en un matériau sandwich composé de deux couches métalliques (26, 28) emprisonnant une couche de matière plastique (24), la feuille extérieure conformée présentant une interface (38 ; 40) ;
- une feuille intérieure conformée (14), réalisée en un matériau sandwich composé de deux couches métalliques (26, 28) emprisonnant une couche de matière plastique (24), la feuille intérieure conformée présentant une interface (32 ; 34) ; et
- des moyens de liaison (58 ; 60) agencés pour assembler l'interface (32, 34) de la feuille extérieure (12) et l'interface (38, 40) de la feuille intérieure (14) de manière à délimiter un conduit creux de renforcement (42).

2. Planche de bord selon la revendication 1, **caractérisée en ce que** le matériau sandwich de la feuille extérieure (12) est le même que le matériau sandwich de la feuille intérieure (14).

3. Planche de bord selon l'une des revendications 1 et 2, **caractérisée en ce que** les couches métalliques (26, 28) du matériau sandwich de la feuille extérieure (12) et/ou du matériau sandwich de la feuille intérieure (14) sont choisies parmi l'acier et l'aluminium.

4. Planche de bord selon l'une des revendications 1 à 3, **caractérisée en ce que** les couches métalliques (26, 28) du matériau sandwich de la feuille extérieure (12) et/ou du matériau sandwich de la feuille intérieure (14) ont une épaisseur (e1) comprise entre 0,2 et 0,3mm, de préférence de 0,25mm.

5. Planche de bord selon l'une des revendications 1 à 4, **caractérisée en ce que** la couche de matière plastique (24) du matériau sandwich de la feuille extérieure (12) et/ou du matériau sandwich de la feuille intérieure (14) est un polymère choisi parmi la famille des matières thermoplastiques.

6. Planche de bord selon l'une des revendications 1 à 5, **caractérisée en ce que** la couche de matière plastique (24) du matériau sandwich de la feuille extérieure (12) et/ou du matériau sandwich de la feuille intérieure (14) a une épaisseur (e2) comprise entre 1mm et 3mm, de préférence de 1,5mm.

7. Planche de bord selon l'une des revendications 1 à 6, **caractérisée en ce que** la feuille extérieure (12) et la feuille intérieure (14) sont conformées par emboutissage.

8. Planche de bord selon l'une des revendications 1 à 7, **caractérisée en ce que** les moyens de liaison comprennent une couche de colle (58) interposée entre les interfaces respectives de la feuille extérieure (12) et de la feuille intérieure (14).

9. Planche de bord selon l'une des revendications 1 à 7, **caractérisée en ce que** les moyens de liaison comprennent un assemblage mécanique (62).

10. Planche de bord selon l'une des revendications 1 à 9, **caractérisée en ce que** la feuille extérieure (12) constitue une armature interne de la planche de bord.

11. Planche de bord selon l'une des revendications 1 à 9, **caractérisée en ce que** la feuille extérieure (12) constitue un panneau support d'instruments.

12. Planche de bord selon l'une des revendications 1 à 11, **caractérisée en ce que** la feuille extérieure (12) comporte une face externe revêtue au moins en partie d'un matériau de garniture (44 ; 70, 72, 74).

13. Planche de bord selon la revendication 12, **caractérisée en ce que** le matériau de garniture (44) comprend une mousse de matière plastique (46) avec une peau extérieure (48).

14. Planche de bord selon l'une des revendications 1 à 13, **caractérisée en ce que** le conduit creux (42) délimite au moins un canal de circulation de fluide (54, 56 ; 108, 110).

15. Planche de bord selon la revendication 14, **caractérisée en ce que** le conduit creux (42) délimite au moins un canal de circulation d'un flux d'air (54, 56 ; 108, 110).

16. Planche de bord selon la revendication 15, **caractérisée en ce que** le conduit creux délimite un canal d'air froid (108) et un canal d'air chaud (110) agencés pour alimenter conjointement au moins une sortie d'air (112) aménagée dans une ouverture de la feuille extérieure (12).

17. Planche de bord selon la revendication 16, **caractérisée en ce que** le conduit creux loge une cloison (106 ; 120) qui sépare le canal d'air froid et le canal d'air chaud.

18. Planche de bord selon l'une des revendications 16 et 17, **caractérisée en ce que** le conduit creux loge au moins un volet (116 ; 122, 124, 126) pour mélanger, en proportion réglable, le flux d'air froid et le flux d'air chaud au travers de la sortie d'air et/ou pour ouvrir ou fermer une sortie d'air.

## Claims

1. Dashboard for an automotive vehicle, comprising:
- a shaped outer sheet (12) made of a sandwich material composed of two metal layers (26, 28) sandwiching a plastic layer (24), the shaped outer sheet having an interface (38; 40);
- a shaped inner sheet (14) made of a sandwich material composed of two metal layers (26, 28) sandwiching a plastic layer (24), the shaped inner sheet having an interface (32; 34); and
- connecting means (58; 60) designed to assemble the interface (32, 34) of the outer sheet (12) with the interface (38, 40) of the inner sheet (14) in such a way as to delimit a hollow reinforcing duct (42).

2. Dashboard according to Claim 1, **characterized in that** the sandwich material of the outer sheet (12) is the same as the sandwich material of the inner sheet (14).

3. Dashboard according to one of Claims 1 and 2, **characterized in that** the metal layers (26, 28) of the sandwich material of the outer sheet (12) and/or of the sandwich material of the inner sheet (14) are chosen from steel and aluminium.

4. Dashboard according to one of Claims 1 to 3, **characterized in that** the metal layers (26, 28) of the sandwich material of the outer sheet (12) and/or of the sandwich material of the inner sheet (14) have a thickness (e1) ranging between 0.2 and 0.3 mm, and preferably of 0.25 mm.

5. Dashboard according to one of Claims 1 to 4, **characterized in that** the plastic layer (24) of the sandwich material of the outer sheet (12) and/or of the sandwich material of the inner sheet (14) is a polymer chosen from the thermoplastics family.

6. Dashboard according to one of Claims 1 to 5, **characterized in that** the plastic layer (24) of the sandwich material of the outer sheet (12) and/or of the sandwich material of the inner sheet (14) has a thickness (e2) ranging between 1 mm and 3 mm, and preferably of 1.5 mm.

7. Dashboard according to one of Claims 1 to 6, **characterized in that** the outer sheet (12) and the inner sheet (14) are shaped by pressing.

8. Dashboard according to one of Claims 1 to 7, **characterized in that** the connecting means comprise a layer of adhesive (58) interposed between the respective interfaces of the outer sheet (12) and of the inner sheet (14).

9. Dashboard according to one of Claims 1 to 7, **characterized in that** the connecting means comprise a mechanical assembly (62).

10. Dashboard according to one of Claims 1 to 9, **characterized in that** the outer sheet (12) constitutes an internal reinforcement of the dashboard.

11. Dashboard according to one of Claims 1 to 9, **characterized in that** the outer sheet (12) constitutes an instrument support panel.

12. Dashboard according to one of Claims 1 to 11, **characterized in that** the outer sheet (12) has an external face at least partially coated with a covering material (44; 70, 72, 74).

13. Dashboard according to Claim 12, **characterized in that** the covering material (44) comprises a plastic foam (46) with an outer skin (48).

14. Dashboard according to one of Claims 1 to 13, **characterized in that** the hollow duct (42) delimits at least one fluid circulation passage (54, 56; 108, 110).

15. Dashboard according to Claim 14, **characterized in that** the hollow duct (42) delimits at least one airflow circulation passage (54, 56; 108, 110).

16. Dashboard according to Claim 15, **characterized in that** the hollow duct delimits a cold air passage (108) and a hot air passage (110) which are arranged in such a way as to feed, jointly, at least one air outlet (112) formed in an opening in the outer sheet (12).

17. Dashboard according to Claim 16, **characterized in that** the hollow duct houses a partition (106; 120) which separates the cold air passage from the hot air passage.

18. Dashboard according to one of Claims 16 and 17, **characterized in that** the hollow duct houses at least one flap (116; 122, 124, 126) for mixing the cold air stream and the hot air stream through the air outlet in adjustable proportions and/or for opening or closing an air outlet.

## Patentansprüche

1. Armaturenbrett für Kraftfahrzeug, Folgendes aufweisend:
- ein geformtes Außenblatt (12), hergestellt aus einem Sandwichmaterial bestehend aus zwei Metallschichten (26, 28), die eine Kunststoffschicht (24) einschließen, wobei das geformte Außenblatt eine Schnittstelle (38; 40) aufweist;
- ein geformtes Innenblatt (14), hergestellt aus einem Sandwichmaterial bestehend aus zwei Metallschichten (26, 28), die eine Kunststoffschicht (24) einschließen, wobei das geformte Innenblatt eine Schnittstelle (32; 34) aufweist; und
- Verbindungsmittel (58; 60), die eingerichtet sind, um die Schnittstelle (32, 34) des Außenblatts (12) und die Schnittstelle (38, 40) des Innenblatts (14) derart zusammenzufügen, dass eine Verstärkungshohlleitung (42) abgegrenzt wird.

2. Armaturenbrett nach Anspruch 1, **dadurch gekennzeichnet, dass** das Sandwichmaterial des Außenblatts (12) gleich ist wie das Sandwichmaterial des Innenblatts (14).

3. Armaturenbrett nach einem der Ansprüche 1 und 2, **dadurch gekennzeichnet, dass** die Metallschichten (26, 28) des Sandwichmaterials des Außenblatts (12) und/oder des Sandwichmaterials des Innenblatts (14) aus Stahl und Aluminium ausgewählt sind.

4. Armaturenbrett nach einem der Ansprüche 1 bis 3, **dadurch gekennzeichnet, dass** die Metallschichten (26, 28) des Sandwichmaterials des Außenblatts (12) und/oder des Sandwichmaterials des Innenblatts (14) eine Stärke (e1) zwischen 0,2 und 0,3 mm, vorzugsweise von 0,25 mm haben.

5. Armaturenbrett nach einem der Ansprüche 1 bis 4, **dadurch gekennzeichnet, dass** die Kunststoffschicht (24) des Sandwichmaterials des Außenblatts (12) und/oder des Sandwichmaterials des Innenblatts (14) ein Polymer ist, der aus der Familie der Thermoplastmaterialien ausgewählt ist.

6. Armaturenbrett nach einem der Ansprüche 1 bis 5, **dadurch gekennzeichnet, dass** die Kunststoffschicht (24) des Sandwichmaterials des Außenblatts (12) und/oder des Sandwichmaterials des Innenblatts (14) eine Stärke (e2) zwischen 1 mm und 3 mm, vorzugsweise von 1,5 mm hat.

7. Armaturenbrett nach einem der Ansprüche 1 bis 6, **dadurch gekennzeichnet, dass** das Außenblatt (12) und das Innenblatt (14) durch Stanzen geformt sind.

8. Armaturenbrett nach einem der Ansprüche 1 bis 7, **dadurch gekennzeichnet, dass** die Verbindungsmittel eine Klebstoffschicht (58) aufweisen, die zwischen die jeweiligen Schnittstellen des Außenblatts (12) und des Innenblatts (14) eingefügt ist.

9. Armaturenbrett nach einem der Ansprüche 1 bis 7, **dadurch gekennzeichnet, dass** die Verbindungsmittel eine mechanische Struktur (62) aufweisen.

10. Armaturenbrett nach einem der Ansprüche 1 bis 9, **dadurch gekennzeichnet, dass** das Außenblatt (12) eine Innenbewehrung des Armaturenbretts bildet.

11. Armaturenbrett nach einem der Ansprüche 1 bis 9, **dadurch gekennzeichnet, dass** das Außenblatt (12) eine Instrumententragtafel bildet.

12. Armaturenbrett nach einem der Ansprüche 1 bis 11, **dadurch gekennzeichnet, dass** das Außenblatt (12) eine Außenseite aufweist, die mindestens zum Teil mit einem Futtermaterial (44; 70, 72, 74) beschichtet ist.

13. Armaturenbrett nach Anspruch 12, **dadurch gekennzeichnet, dass** das Futtermaterial (44) einen Kunststoffschaumstoff (46) mit einer Außenhaut (48) aufweist.

14. Armaturenbrett nach einem der Ansprüche 1 bis 13, **dadurch gekennzeichnet, dass** die Hohlleitung (42) mindestens einen Fluidzirkulationskanal (54, 56; 108, 110) abgrenzt.

15. Armaturenbrett nach Anspruch 14, **dadurch gekennzeichnet, dass** die Hohlleitung (42) mindestens einen Zirkulationskanal eines Luftstroms (54, 56; 108, 110) abgrenzt.

16. Armaturenbrett nach Anspruch 15, **dadurch gekennzeichnet, dass** die Hohlleitung einen Kaltluftkanal (108) und einen Warmluftkanal (110) abgrenzt, die eingerichtet sind, um gemeinsam mindestens einen Luftausgang (112), der in einer Öffnung des Außenblatts (12) eingerichtet ist, zu versorgen.

17. Armaturenbrett nach Anspruch 16, **dadurch gekennzeichnet, dass** die Hohlleitung eine Wand (106; 120) aufnimmt, die den Kaltluftkanal und den Warmluftkanal trennt.

18. Armaturenbrett nach einem der Ansprüche 16 und 17, **dadurch gekennzeichnet, dass** die Hohlleitung mindestens eine Klappe (116; 122, 124, 126) aufnimmt, um in einstellbarem Anteil den Kaltluftstrom und den Warmluftstrom über den Luftausgang zu vermischen und/oder um einen Luftausgang zu öffnen oder zu schließen.
